# EUROPÄISCHE PATENTSCHRIFT

(11) **EP 0 314 977 B1**
(45) Veröffentlichungstag und Bekanntmachung des Hinweises auf die Patenterteilung: **30.06.1993**
(21) Anmeldenummer: 88117299.3
(22) Anmeldetag: 18.10.1988
(51) Int. Cl.: C06D 5/10, F02B 43/10

(54) **Vorrichtung zur Energieerzeugung**
Device for producing energy
Dispositif pour la production d'énergie

(30) Priorität: 06.11.1987 DE 3737722
(43) Veröffentlichungstag der Anmeldung: 10.05.1989
(73) Patentinhaber: ERNO Raumfahrttechnik Gesellschaft mit beschränkter Haftung, D-28199 Bremen (DE)
(72) Erfinder: Hafkemeyer, Hannsgeorg, Dipl.-Ing., D-2805 Stuhr 2 (DE); Cohrt, Claus, Dipl.-Ing., D-2803 Weyhe (DE)

(56) Entgegenhaltungen:
- EP-A- 0 188 092
- DE-A- 3 443 984
- US-A- 4 129 003

## Beschreibung

Die Erfindung betrifft eine Vorrichtung zur chemothermischen Energieerzeugung unter Verwendung eines Feststoffanteile enthaltenen Brennstoffstranges, bestehend aus einem Vorratsbehälter, einem Fördersystem sowie einer Reaktionskammer.

Es ist bereits vorgeschlagen worden, insbesondere für den Bereich der Unterwasserantriebstechnik chemothermische Energieerzeugungssysteme einzusetzen, bei denen der Brennstoff ganz oder teilweise aus Feststoffpartikeln besteht und bei denen dieser Brennstoff in der Reaktionskammer mit einem Oxydator zur Reaktion gebracht wird. Zur Verbesserung der Funktionstüchtigkeit derartiger Energieerzeugungssysteme hat es sich dabei als besonders vorteilhaft erwiesen, wenn die festen Brennstoffanteile in Form eines Brennstoffstranges in die Reaktionskammer gefördert werden. Dadurch wird nicht nur eine störungsfreie, exakt regelbare Brennstoffzufuhr zur Reaktionskammer gewährleistet, sondern es werden auch Erosionserscheinungen an Komponenten des Fördersystems, wie sie häufig dann auftreten, wenn die Feststoffanteile lediglich in eine pastöse Masse eingebettet sind, zuverlässig vermieden.

Aufgabe der Erfindung ist es, eine Energieerzeugungsvorrichtung, die für die Verwendung eines strangförmigen Brennstoffes ausgelegt ist, sowohl hinsichtlich ihrer Energiebilanz als auch hinsichtlich ihrer Betriebssicherheit noch weiter zu verbessern.

Die Erfindung löst diese Aufgabe, indem sie vorsieht, daß der Förderweg des Brennstoffstranges von einer druckdichten, sowohl mit dem Vorratsbehälter als auch mit der Reaktionskammer verbundenen Umhüllung umgeben ist und daß der Vorratsbehälter und der Bereich des Förderweges mit einem Schutzgas beaufschlagt werden, dessen Druck zumindest gleich groß ist wie der Betriebsdruck in der Reaktionskammer. Auf diese Weise wird vermieden, daß die bei der Energieerzeugung entstehenden Brennraumgase in die Brennstoffversorgungsanlage zurückströmen können.

Dadurch, daß in vorteilhafter Weiterbildung der Erfindung vorgesehen ist, daß der Brennstoffstrang vor seiner Zuführung in die Reaktionskammer in einzelne Abschnitte verlegt wird, wird weiterhin verhindert, daß sich der Brennstoffstrang infolge von Wärmeleitung über den Bereich einer hierfür vorgesehenen Trenneinheit hinaus in Richtung auf den Vorratsbehälter erwärmt. Indem weiterhin der Förderbereich für die Strangabschnitte in die Reaktionskammer durch eine Kühlvorrichtung zusätzlich gekühlt wird, wird sichergestellt, daß sich auch die Fördereinrichtung selbst nicht als Folge der Wärmeleitung weiter aufheizt.

Dadurch, daß weiterhin vorgesehen ist, daß das aus der Kühlvorrichtung stammende Kühlwasser in die Reaktionskammer eingespritzt und so ebenfalls als Treibstoffkomponente benutzt wird, ergibt sich eine weitere Verbesserung der Energiebilanz. In weiterer Ausgestaltung der Erfindung ist ferner vorgesehen, daß das Schutzgas so gewählt ist, daß Leckmengen, die in die Reaktionskammer einströmen, über eine chemische Reaktion mit den Reaktionsprodukten der Treibstoffe reagieren und abgebunden werden, so daß es nicht zur einer Entstehung wasserunlöslicher Gase kommt. Insgesamt ermöglicht die erfindungsgemäße Energieerzeugungsvorrichtung den Einsatz höhenenergetischer Treibstoffkombinationen für Unterwasserantriebszwecke, insbesondere den Einsatz von festen sogenannten Monopropellants sowie von vorgemischten Festtreibstoffen.

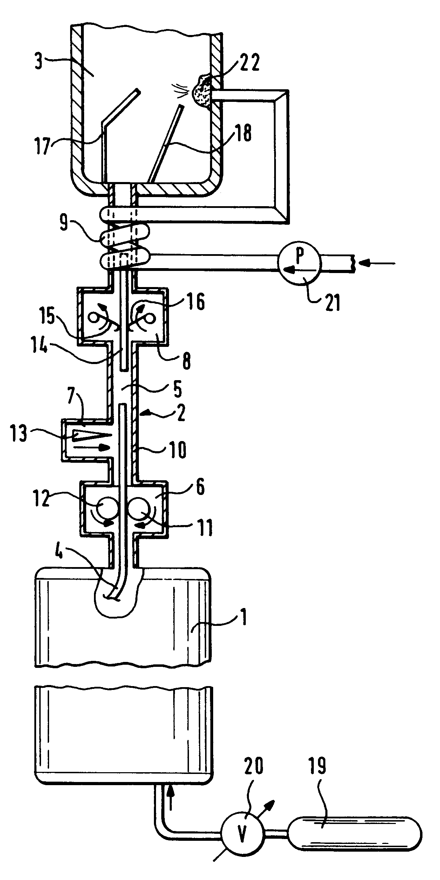

Im folgenden soll die Erfindung anhand der Zeichnung näher erläutert werden. Die Figur zeigt dabei in schematischer Darstellung eine Vorrichtung zur Energieerzeugung, die im wesentlichen aus drei Hauptbaugruppen besteht, nämlich einem Vorratsbehälter 1, einem Fördersystem 2 sowie einer Reaktionskammer 3. Im Vorratsbehälter 1 ist der Brennstoff, der aus in einem Trägerstrang eingebetteten Feststoffpartikeln besteht, rollenförmig gelagert. Die Zufuhr des Brennstoffstrangs 4 zur Reaktionskammer 3 erfolgt über einen Förderweg 5, entlang dessen eine mechanische Antriebseinheit (Fördervorrichtung) 6, eine Trenneinheit 7 sowie eine Beschleunigungseinheit 8 angeordnet sind. Schließlich ist entlang des Förderweges, kurz vor dem Eintritt in die Reaktionskammer 3, noch eine Kühleinrichtung 9 angeordnet. Der gesamte Förderweg 5, einschließlich der Antriebseinheit 6, der Trenneinheit 7 und der Beschleunigungseinheit 8 befindet sich in einer druckdichten Umhüllung 10, die mit ihrem einen Ende mit dem Vorratsbehälter 1 und mit ihrem anderen Ende mit der Reaktionskammer 3 in Verbindung steht.

Die mechanische Antriebseinheit 6 besteht aus Förderrollen 11 und 12, die mit dem Brennstoffstrang 4 in Eingriff stehen und die diesem eine Bewegungskomponente in Richtung auf die Reaktionskammer 3 vermitteln. In der nachfolgend am Förderweg 5 angeordneten Trenneinheit 7 ist ein Trennmesser 13 in Richtung auf den Brennstoffstrang 4 beweglich gehaltert, mit dessen Hilfe der Strang in einzelne Abschnitte 14 zerteilt werden kann. Diese Abschnitte 14 gelangen anschließend in die Beschleunigungseinheit 8, in der zwei federbelastete Beschleunigungshebel 15 und 16 auf sie einwirken und ihnen eine Beschleunigung in Richtung auf die Reaktionskammer vermitteln. Dort prallen die Abschnitte 14 auf eine Umlenkvorrichtung 17, von wo aus sie auf eine Auffangplatte 18 gelangen.

Der Vorratsbehälter 1 wird ebenso wie die gesamte in der Umhüllung 10 befindliche Fördervorrichtung durch einen Schutzgasspeicherbehälter 19 über ein Druckregelventil 20 mit Schutzgas beaufschlagt. Das Druckniveau ist dabei so eingestellt, daß es demjenigen in der Reaktionskammer 3 entspricht bzw. geringfügig über diesem liegt. Indem dabei laufend Schutzgas zugeführt wird, wird ein Volumenausgleich für verbrauchten Treibstoff vorgenommen, und es werden Leckverluste ausgeglichen, die während des Treibstofftransportes in die Reaktionskammer auftreten. Da auch die Fördervorrichtung 6, die Trenneinheit 7 und die Beschleunigungseinheit 8 sich unter der Schutzgasatmosphäre befinden, besitzt das gesamte Brennstoffördersystem praktisch eine pneumatische Abdichtung gegenüber der Atmospäre in der Reaktionskammer. Damit ist ein Wärmetransport durch einen Stofftransport aus der Reaktionskammer in das Brennstoffördersystem unterbunden.

Die Kühleinrichtung 9 besteht aus einer wasserdurchflossenen Rohrschlange, die über eine Kühlwasserpumpe 21 beaufschlagt wird und die in eine Einspritzeinrichtung 22 mündet, die im Innern der Reaktionskammer 3 angeordnet ist. Diese Wasserkühlung im Bereich der rohrförmigen Umhüllung 10 zwischen der Beschleunigungseinheit 8 und der Reaktionskammer 3 verhindert einen Wärmetransport aus der Reaktionskammer 3 in den Bereich des Fördersystems 2 infolge Wärmeleitung über die Umhüllung 10. Durch die Auftrennung des Brennstoffstranges 4 in einzelne Abschnitte 14 sowie deren Entfernung vom restlichen Brennstoffstrang 4 mittels der Beschleunigungseinheit 8 wird darüber hinaus erreicht, daß auch über den Brennstoffstrang 4 selbst kein Wärmetransport erfolgen kann.

Ein besonders geeignetes Brennstoffsystem für die vorstehend beschriebene Energieerzeugungsvorrichtung besteht dabei aus metallischem Lithium sowie kristallinem, wasserfreiem Lithiumperchlorat (LiClO₄), wobei das Lithiumperchlorat als Füllung in einem Lithiumrohr vorliegt, das den Brennstoffstrang 4 bildet. Die chemische Reaktion besteht in der Verbrennung dieser Komponenten unter dem Zusatz von Wasser gemäß der Gleichung

8 Li + LiClO₄ + 4 H₂O → LiCl + 8 LiOH

Als Schutzgas kann bei diesem System Kohlendioxid (CO₂) dienen, wobei etwaig in die Reaktionskammer 3 eindringende Leckmenge gemäß der Reaktion

CO₂ + 2 LiOH → Li₂CO₃ + H₂O

abgebunden werden.

Das Wasser der Kühleinrichtung, das ganz oder teilweise in die Reaktionskammer 3 eingespritzt wird, übernimmt dabei die Rolle einer zusätzlichen Treibstoffkomponente.

## Patentansprüche

1. Vorrichtung zur chemothermischen Energieerzeugung unter Verwendung eines Feststoffanteile enthaltenden Brennstoffstranges, bestehend aus einem Vorratsbehälter, einem Fördersystem sowie einer Reaktionskammer, dadurch gekennzeichnet, daß der Förderweg (5) des Brennstoffstranges (4) von einer druckdichten, sowohl mit dem Vorratsbehälter (1) als auch mit der Reaktionskammer (3) verbundenen Umhüllung (10) umgeben ist und daß der Vorratsbehälter (1) und der Bereich des Förderweges (5) mit einem Schutzgas beaufschlagt werden, dessen Druck zumindest gleich groß ist wie der Betriebsdruck in der Reaktionskammer (3).

2. Vorrichtung nach Anspruch 1, dadurch gekennzeichnet, daß entlang des Förderweges (5), innerhalb der Umhüllung (10) eine mechanische Antriebseinheit (6), eine Trenneinheit (7) sowie eine Beschleunigungseinheit (9) angeordnet sind.

3. Vorrichtung nach Anspruch 2, dadurch gekennzeichnet, daß die Antriebseinheit (6) mit Förderrollen (11,12) versehen ist, die mit dem Brennstoffstrang (4) in Eingriff bringbar sind.

4. Vorrichtung nach Anspruch 2 oder 3, dadurch gekennzeichnet, daß die Trenneinheit (7) mit einem in Richtung auf den Brennstoffstrang (4) bewegbaren Trennmesser (13) versehen ist.

5. Vorrichtung nach einem der Ansprüche 2 bis 4, dadurch gekennzeichnet, daß die Beschleunigungseinheit (8) zwei federbelastete, mit dem Brennstoffstrang (4) in Eingriff bringbare Beschleunigungshebel aufweist.

6. Vorrichtung nach einem der Ansprüche 2 bis 5, dadurch gekennzeichnet, daß vor der Reaktionskammer (3) eine Kühleinrichtung (9) angeordnet ist.

7. Vorrichtung nach Anspruch 6, dadurch gekennzeichnet, daß die Kühleinrichtung (9) mit Wasser beaufschlagbar ist und über eine Einspritzdüse (22) mit der Reaktionskammer (3) in Verbindung steht.

8. Vorrichtung nach einem der Ansprüche 1 bis 7, dadurch gekennzeichnet, daß das Schutzgas über einen Schutzgasspeicherbehälter (19) in den Vorratsbehälter (1) einbringbar ist.

9. Vorrichtung nach einem der Ansprüche 1 bis 8, dadurch gekennzeichnet, daß der Treibstoff aus einem Monopropellant besteht.

10. Vorrichtung nach einem der Ansprüche 1 bis 8, dadurch gekennzeichnet, daß der Treibstoff aus einem vorgemischten Bipropellant besteht.

11. Vorrichtung nach Anspruch 10, dadurch gekennzeichnet, daß der Treibstoff aus einer Kombination aus metallischen Lithium sowie kristallinem, wasserfreiem Lithiumperchlorat (LiClO₄) besteht.

12. Vorrichtung nach Anspruch 11, dadurch gekennzeichnet, daß der Treibstoffstrang (4) von einem mit Lithiumperchlorat (LiClO₄) gefüllten Lithiumrohr gebildet wird.

13. Vorrichtung nach einem der Ansprüche 1 bis 12, dadurch gekennzeichnet, daß als Schutzgas Kohlendioxid (CO₂) verwendet wird.

## Claims

1. A device for thermochemical energy production using fuel strands containing a solid component, comprising a supply container, a conveying system and a reaction chamber, characterised in that the conveying path (5) of the fuel strand (4) is surrounded by a pressure-tight envelope (10) connected with the supply container (1) and with the reaction chamber (3), and that the supply container (1) and the region of the conveying path (5) are loaded with a protective gas, of which the pressure is at least as great as the operating pressure in the reaction chamber (3).

2. A device according to claim 1, characterised in that along the conveying path (5) within the envelope (10) there are arranged a mechanical operating unit (6), a separating unit (6) and an accelerator unit (9).

3. A device according to claim 2, characterised in that the operating unit (6) is provided with conveying rollers (11, 12), which can be brought into engagement with the fuel strand (4).

4. A device according to claim 2 or 3, characterised in that the separating unit (7) is provided with a separating knife (13) movable in the direction towards the fuel strand (4).

5. A device according to any one of claims 2 to 4, characterised in that the accelerator unit (8) has two resiliently-loaded accelerator levers which can be brought into engagement with the fuel strand (4).

6. A device according to any one of claims 2 to 5, characterised in that in front of the reaction chamber (3) there is arranged a cooling arrangement (9).

7. A device according to claim 6, characterised in that the cooling arrangement (9) can be provided with water and is in connection with the reaction chamber (3) by means of injection nozzles (22).

8. A device according to any one of claims 1 to 7, characterised in that the protective gas can be introduced into the supply container (1) by means of a protective gas storage container (19).

9. A device according to any one of claims 1 to 8, characterised in that the propellant comprises a monopropellant.

10. A device according to any one of claims 1 to 8, characterised in that the propellant comprises a premixed bipropellant.

11. A device according to claim 10, characterised in that the propellant comprises a combination of metallic lithium and a crystalline, water-free lithium perchlorate (LiClO₄).

12. A device according to claim 11, characterised in that the propellant strand (4) is formed of a lithium tube filled with lithium perchlorate (LiClO₄).

13. A device according to any one of claims 1 to 12, characterised in that carbon dioxide (CO₂) is used as the protective gas.

## Revendications

1. Dispositif pour générer de l'énergie par voie chimiothermique en utilisant un cordon de combustible contenant des composants solides, dispositif composé d'un réservoir d'alimentation, d'un système de transfert ainsi que d'une chambre de réaction, dispositif caractérisé en ce que le chemin de transfert (5) du cordon de combustible (4) est entouré d'une enveloppe (10) étanche à la pression et reliée à la fois au réservoir d'alimentation (1) et à la chambre de réaction (3), le réservoir d'alimentation (1) ainsi que la zone du chemin de transfert (5) recevant un gaz protecteur dont la pression est au moins égale à la pression de fonctionnement régnant dans la chambre de réaction (3).

2. Dispositif selon la revendication 1, caractérisé en ce que le long du chemin de transfert (5), à l'intérieur de l'enveloppe (10), il y a une unité d'entraînement mécanique (6), une unité de séparation (7) ainsi qu'une unité d'accélération (9).

3. Dispositif selon la revendication 2, caractérisé en ce que l'unité d'entraînement (6) comporte des galets de transfert (11, 12) susceptibles de venir en prise avec le cordon de combustible (4).

4. Dispositif selon la revendication 2 ou 3, caractérisé en ce que l'unité de séparation (7) est munie d'un couteau séparateur (13) mobile en direction du cordon de combustible (4).

5. Dispositif selon l'une des revendications 2 à 4, caractérisé en ce que l'unité d'accélération (8) comprend deux leviers d'accélération, chargés par ressort et qui sont susceptibles de venir en prise contre le cordon de combustible (4).

6. Dispositif selon l'une des revendications 2 à 5, caractérisé par un dispositif de refroidissement (9) en amont de la chambre de réaction (3).

7. Dispositif selon la revendication 6, caractérisé en ce que le dispositif de refroidissement (9) est alimenté en eau et communique par une buse d'injection (22) avec la chambre de réaction (3).

8. Dispositif selon l'une des revendications 1 à 7, caractérisé en ce que le gaz protecteur s'introduit dans le réservoir d'alimentation (1) par l'intermédiaire d'un réservoir accumulateur (19) contenant le gaz protecteur.

9. Dispositif selon l'une des revendications 1 à 8, caractérisé en ce que l'agent de propulsion est un agent de propulsion à un seul composant.

10. Dispositif selon l'une des revendications 1 à 8, caractérisé en ce que l'agent de propulsion est formé de deux composants, mélangés préalablement.

11. Dispositif selon la revendication 10, caractérisé en ce que l'agent de propulsion est formé de la combinaison de lithium métallique et de perchlorate de lithium déshydraté, cristallin (LiCLO₄).

12. Dispositif selon la revendication 11, caractérisé en ce que le cordon d'agent de propulsion (4) est formé d'un tube de lithium rempli de perchlorate de lithium (LiCLO₄).

13. Dispositif selon l'une des revendications 1 à 12, caractérisé en ce que le gaz protecteur est du dioxyde de carbone (CO₂).
